(19) **Europäisches Patentamt / European Patent Office / Office européen des brevets**

(11) **EP 3 339 354 A1**

(12) **EUROPEAN PATENT APPLICATION**
published in accordance with Art. 153(4) EPC

(43) Date of publication:
**27.06.2018 Bulletin 2018/26**

(21) Application number: **16837110.2**

(22) Date of filing: **16.08.2016**

(51) Int Cl.:
**C08J 5/04** (2006.01)  **B60C 9/00** (2006.01)
**D02G 3/48** (2006.01)

(86) International application number:
**PCT/JP2016/073911**

(87) International publication number:
**WO 2017/030121 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.08.2015 JP 2015160581**

(71) Applicant: **Bridgestone Corporation**
**Tokyo 104-8340 (JP)**

(72) Inventor: **NAKAMURA Masaaki**
**Tokyo 104-8340 (JP)**

(74) Representative: **Oxley, Robin John George**
**Marks & Clerk LLP**
**90 Long Acre**
**London WC2E 9RA (GB)**

(54) **RUBBER-FIBER COMPOSITE, RUBBER-RESIN COMPOSITE AND PNEUMATIC TIRE IN WHICH SAME IS USED**

(57) An object of the present invention is to provide: a rubber-fiber composite obtained by coating a core-sheath fiber with a rubber, in which adhesion between the rubber and the fiber is improved and which is thereby allowed to exhibit an improved durability as compared to conventional rubber-fiber composites when used as a reinforcing material; a rubber-resin composite; and a pneumatic tire using the same. The rubber-fiber composite is obtained by coating a reinforcing material with a rubber, which reinforcing material is composed of a core-sheath type composite fiber whose core portion is constituted by a high-melting-point resin having a melting point of 150°C or higher and sheath portion is constituted by an olefin-based polymer having a melting point lower than that of the high-melting point resin.

FIG. 1A

FIG. 1B

FIG. 1C

FIG. 1D

**Description**

TECHNICAL FIELD

The present invention relates to a rubber-fiber composite, a rubber-resin composite, and a pneumatic tire using the same (hereinafter, also simply referred to as "tire"). More particularly, the present invention relates to: a rubber-fiber composite and a rubber-resin composite, which are useful for reinforcement of rubber articles such as tires; and a pneumatic radial tire using the same.

BACKGROUND ART

Conventionally, as reinforcing materials of rubber articles, a variety of materials such as organic fibers and metal materials have been examined and used. Particularly, as reinforcing materials used for reinforcement of rubber articles such as pneumatic tires that are subjected to strain input, cord materials whose adhesion with a rubber is improved by coating with an adhesive composition have been used conventionally.

Further, as one type of organic fiber, the use of a so-called "core-sheath fiber", whose cross-sectional structure is constituted by a core portion in the center and a sheath portion covering the periphery of the core portion, as a reinforcing material has also been examined in various studies. For example, Patent Document 1 discloses a cord-rubber composite obtained by embedding a cord in an unvulcanized rubber and integrating them by vulcanization, which cord is composed of a core-sheath type fiber that contains a resin selected from at least one of polyesters, polyamides, polyvinyl alcohols, polyacrylonitriles, rayons and heterocycle-containing polymers as a core component, and a thermoplastic resin that is thermally fusible with a rubber as a sheath component.

RELATED ART DOCUMENT

PATENT DOCUMENT

[Patent Document 1] Japanese Unexamined Patent Application Publication No. HI0-6406 (Claims, etc.)

SUMMARY OF THE INVENTION

PROBLEMS TO BE SOLVED BY THE INVENTION

However, when a cord material treated with an adhesive is cut to be embedded into a rubber, the cut end surface of the cord material is not covered with an adhesive composition; therefore, there is a problem that an excessive strain applied thereto after adhesion with the rubber may cause a crack to be generated from this end surface of the cord material and this is likely to result in breakdown. A reinforcing material in which such a core-sheath fiber as disclosed in Patent Document 1 is used also has the same problem, which is desired to be resolved.

In view of the above, an object of the present invention is to provide: a rubber-fiber composite obtained by coating a core-sheath fiber with a rubber, in which adhesion between the rubber and the fiber is improved and which is thereby allowed to exhibit an improved durability as compared to conventional rubber-fiber composites when used as a reinforcing material; a rubber-resin composite; and a pneumatic tire using the same.

MEANS FOR SOLVING THE PROBLEMS

The present inventor intensively studied to discover that the above-described problem can be solved by using a core-sheath type composite fiber whose core portion is constituted by a high-melting-point resin having a melting point of 150°C or higher and sheath portion is constituted by a specific olefin-based polymer, thereby completing the present invention.

That is, the rubber-fiber composite of the present invention is characterized in that it is obtained by coating a reinforcing material with a rubber, which reinforcing material is composed of a core-sheath type composite fiber whose core portion is constituted by a high-melting-point resin having a melting point of 150°C or higher and sheath portion is constituted by an olefin-based polymer having a melting point lower than that of the high-melting point resin.

In the rubber-fiber composite of the present invention, it is preferred that the olefin-based polymer be an olefin-based random copolymer obtained by addition polymerization of a monomer comprising ethylene or propylene. It is also preferred that the olefin-based polymer be an ethylene-propylene random copolymer and, in this case, the propylene content and the ethylene content in the ethylene-propylene random copolymer are preferably 99.7% by mole to 20% by mole and 0.3% by mole to 80% by mole, respectively. Further, it is preferred that the olefin-based polymer be a polyethylene-based polymer, and it is also preferred that the polyethylene-based polymer be a polyethylene polymer or an ethylene-$\alpha$-olefin copolymer. The reinforcing material preferably has a fineness of 100 dtex to 5,000 dtex, and it is preferred that the reinforcing material do not substantially intersect in the composite and be composed of 1 or not more than 10 bundles. Still further, in the rubber-fiber composite of the present invention, the crystallinity parameter of the ethylene-propylene random copolymer, which is measured by Raman spectroscopy, is preferably -0.06 or less, and the orientation parameter of the ethylene-propylene random copolymer, which is determined from the intensity ratio of Raman bands measured by Raman spectroscopy for polarization directions, is preferably 13 or less.

The rubber-resin composite of the present invention is characterized in that it is obtained by coating a reinforcing material with a rubber and vulcanizing the resultant, the reinforcing material being composed of a core-sheath type resin body whose core portion is constituted by a high-melting-point resin having a melting point of 150°C or higher and sheath portion is constituted by an olefin-based polymer having a melting point lower than that of the high-melting point resin, wherein, at a longitudinal end of the resin body, the end surface of the high-melting-point resin is covered with the olefin-based polymer, and the olefin-based polymer and the rubber are fused together.

In the present invention, a phenomenon that a fiber resin which is melted by heating at a temperature of its melting point or higher is tightly adhered with a rubber through interaction at their interface is referred to as "fusion".

In the rubber-resin composite of the present invention, it is preferred that the high-melting-point resin be a polyolefin resin or a polyester resin, and it is also preferred that the reinforcing material have a fineness of 100 dtex to 5,000 dtex. Further, in the rubber-resin composite of the present invention, the reinforcing material preferably has a tensile strength at break of not less than 29 N/mm$^2$. Still further, it is preferred that the reinforcing material do not substantially intersect in the composite and be composed of 1 or not more than 10 bundles, and the polyester resin is preferably polytrimethylene terephthalate (PTT) .

The tire of the present invention is characterized by comprising a reinforcing layer composed of the above-described rubber-fiber composite or the above-described rubber-resin composite.

EFFECTS OF THE INVENTION

According to the present invention, a rubber-fiber composite obtained by coating a core-sheath fiber with a rubber, in which adhesion between the rubber and the fiber is improved and which is thereby allowed to exhibit an improved durability as compared to conventional rubber-fiber composites when used as a reinforcing material; a rubber-resin composite; and a pneumatic tire using the same, can be realized.

BRIEF DESCRIPTION OF THE DRAWINGS

FIG. 1A is a first explanatory drawing illustrating the behavior of a cut end of the rubber-fiber composite of the present invention during vulcanization.

FIG. 1B is a second explanatory drawing illustrating the behavior of a cut end of the rubber-fiber composite of the present invention during vulcanization.

FIG. 1C is a third explanatory drawing illustrating the behavior of a cut end of the rubber-fiber composite of the present invention during vulcanization.

FIG. 1D is a fourth explanatory drawing illustrating the behavior of a cut end of the rubber-fiber composite of the present invention during vulcanization.

FIG. 2 is a widthwise cross-sectional view illustrating one example of the pneumatic tire of the present invention.

FIG. 3 is a fluorescence micrograph showing a longitudinal end of the rubber-resin composite obtained in Example 1.

MODE FOR CARRYING OUT THE INVENTION

Embodiments of the present invention will now be described in detail referring to the drawings.

The rubber-fiber composite of the present invention is obtained by coating a reinforcing material with a rubber, which reinforcing material is composed of a core-sheath type composite fiber whose core portion is constituted by a high-melting-point resin having a melting point of 150°C or higher and sheath portion is constituted by an olefin-based polymer having a melting point lower than that of the high-melting point resin constituting the core portion.

In the core-sheath type composite fiber used in the rubber-fiber composite of the present invention, since the olefin-based polymer constituting the sheath portion has a melting point lower than that of the core portion, there is an advantage that the composite fiber, when applied for reinforcement of a rubber article, can be directly adhered with a rubber through thermal fusion by the heat applied during vulcanization. That is, the reinforcing material according to the present invention is coated with a rubber to form a rubber-fiber composite and, since integration of this rubber-fiber composite with a rubber does not require a dipping treatment in which an adhesive composition (e.g., a resorcin-formalin-latex (RFL) adhesive) conventionally used for bonding tire cords is applied, the bonding step can be simplified. Further, in the application for reinforcement of a tire or the like, for adhesion of an organic fiber with a rubber using an adhesive composition, it is generally required to coat the organic fiber with a fiber coating rubber (skim rubber) in order to secure an adhesive strength; however, according to the reinforcing material of the present invention, a high adhesive strength between the reinforcing material and a side rubber, a tread rubber or the like can be directly attained through thermal fusion without requiring a fiber coating rubber. In cases where an organic fiber is coated with a fiber coating rubber, since it is necessary to secure such a coating thickness that prevents breakage of the rubber coating, the rubber weight is increased as much as the amount of the rubber used for securing the coating thickness, which in turn contradicts the demand for reduction in tire weight that generally contributes to improvement of the economic efficiency. However, in the present invention, there is no such restriction in the adhesion process; therefore, a composite with a rubber species appropriate for a part to be reinforced, such as a side tread rubber, can be provided without any secondary negative effect such as an increase in the weight of fiber coating rubber.

In this manner, the above-described core-sheath type composite fiber is capable of exhibiting sufficient reinforcement performance when used as a reinforcing material of a rubber article such as a tire. Accordingly, since the rubber-fiber composite of the present invention can be fused with a rubber via the sheath portion in the absence of a dipping treatment or a rubber coating process while securing reinforcement performance by the core portion, the use of the rubber-fiber composite of the present invention particularly in the tire reinforcement application can also contribute to a reduction in tire weight through a reduction in gauge thickness.

Further, according to the studies conducted by the present inventor, it was found that, when the rubber-fiber composite of the present invention is vulcanized, at a cut end of the resultant, the cut end surface of the core portion that was exposed prior to the vulcanization is covered by the resin of the sheath portion, and the resin of the sheath portion and a rubber can be strongly fused together in this part as well. The reason for this is believed to be because the low-melting-point olefin-based polymer constituting the sheath portion is made to flow by the heat applied during the vulcanization and infiltrates into gaps between the cut end surface of the core portion constituted by a high-melting-point resin and the rubber. Consequently, the durability of the rubber-fiber composite against strain can be further improved after the vulcanization.

In those organic fibers for rubber article reinforcement which are coated with an adhesive composition such as a resorcin-formalin-latex (RFL) adhesive that is conventionally used for bonding tire cords, since cords are cut in accordance with the dimensions of a member in the process of assembling the member composed of a rubber or a coated cord material, the surface of the end at which the cords are cut is not treated with the adhesive composition. In such a rubber article, input of a high strain that causes detachment of a cord end and the rubber may cause development of a crack from the non-adhered part between the cord end and the rubber, and this could result in breakage of the rubber article. Therefore, in the structural design of commercial rubber articles such as tires, there are restrictions relating to inhibition of crack generation from a cord end in that, for example, no cord end should be arranged in a tire part subjected to high strain, or strain causing detachment of a cord end and a rubber should be reduced by increasing the thickness of the rubber member or the like. On the other hand, in the present invention, since such a cut end surface of a cord fuses with a rubber, there is no restriction associated with development of a crack from a non-adhered part between the cord end and the rubber due to strain; therefore, it is now possible to provide a composite with a rubber species that allows a design of arranging a cord end in a tire part subjected to high strain, which was difficult in the past, and enables to achieve a reduction in tire weight through a reduction in gauge thickness in the vicinity of the cord end as it is no longer necessary to worry about an increase in strain that causes detachment of the cord end and the rubber.

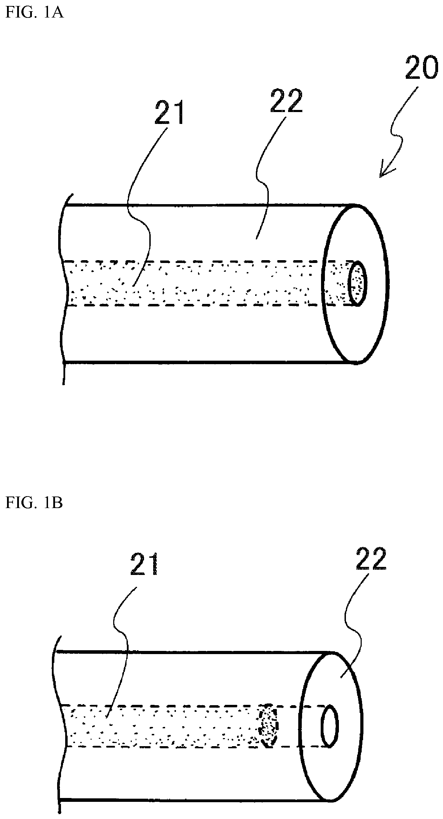

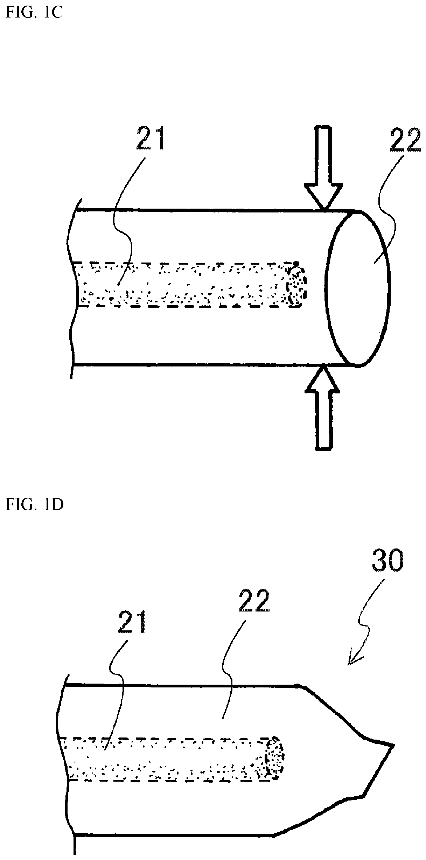

FIGs. 1A to 1D are explanatory drawings illustrating the behavior of a cut end of the rubber-fiber composite of the present invention during vulcanization. During vulcanization, the high-melting-point resin of the core portion is subjected to about the same amount of heat as in molding; therefore, as a characteristic feature of a material produced by stretching such as a fiber or a film, while the high-melting-point resin of the core portion shrinks, the resin of the sheath portion that surrounds the core portion and has a lower melting point is fluidized and thermally expands in a molten state. Accordingly, between a core portion 21 and a sheath portion 22 which are originally at positions arranged in a core-sheath form along the cord axial direction at the monofilament end surface in a rubber-fiber composite 20 prior to vulcanization as illustrated in FIG. 1A, the high-melting-point resin of the core portion 21 shrinks in the cord axial direction during vulcanization (FIG. 1B). Meanwhile, a cavity formed near the end surface where the high-melting-point resin of the core portion 21 previously existed is subjected to a pressure generated by vulcanization and filled by the resin of the sheath portion 22 that is fluidized in the surrounding (FIG. 1C), and the sheath portion 22 consequently collapses in appearance. As a result, the mode of a rubber-resin composite 30, in which the high-melting-point resin of the core portion 21 previously exposed at the cut end is covered with the low-melting-point resin of the sheath portion 22, is formed (FIG. 1D).

In the rubber-fiber composite of the present invention, the melting point of the high-melting-point resin constituting the core portion is 150°C or higher, preferably 160°C or higher. When the melting point of the high-melting-point resin is lower than 150°C, for example, the core portion of the composite fiber is melt-deformed and reduced in thickness and/or the orientation of the fiber resin molecules is deteriorated during vulcanization of a rubber article, so that sufficient reinforcing performance is not attained. Further, in the rubber-fiber composite of the present invention, the lower limit of the melting point of the olefin-based polymer constituting the sheath portion is in a range of preferably 80°C or higher, more preferably 120°C or higher, still more preferably 135°C or higher. When the melting point of the olefin-based polymer is lower than 80°C, a sufficient adhesive strength may not be obtained due to, for example, formation of fine voids on the surface that is caused by inadequate adhesion of the rubber to the surface of the olefin-based polymer through fluidization in the early stage of vulcanization. The melting point of the olefin-based polymer is preferably 120°C or higher since this enables to simultaneously perform thermal fusion of the rubber and the low-melting-point polyolefin resin and a vulcanization cross-linking reaction of the resulting rubber composition at a vulcanization temperature of 130°C or higher that is used industrially for rubber compositions in which sulfur and a vulcanization accelerator are incorporated. In cases where the vulcanization temperature is set at 170°C or higher in order to industrially shorten the vulcanization time, with the melting point of the olefin-based polymer being lower than 80°C, since the viscosity of the molten resin is excessively low and the thermal fluidity is thus high during vulcanization, a pressure applied during vulcanization may cause generation of a thin part in the sheath, and a strain stress applied in an adhesion test or the like may be concentrated in such a thin part of the sheath resin to make this part more likely to be broken; therefore, the melting point of the olefin-based polymer is more preferably 120°C or higher. Meanwhile, when the upper limit of the melting point of the olefin-based polymer is lower than 150°C, because of the thermal fluidity of the olefin-based polymer, compatibility with a rubber composition in the early stage of vulcanization may be attained at a high vulcanization temperature of 175°C or higher. Further, when the melting point of the olefin-based polymer is 145°C or lower, resin compatibility in the early stage of vulcanization can be attained at a common vulcanization temperature, which is preferred.

The composite fiber used in the present invention for rubber reinforcement is characterized by being a composite fiber having a core-sheath structure in which a sheath portion is constituted by a low-melting-point olefin-based polymer and can be directly adhered with a rubber through thermal fusion and, at the same time, the core portion is constituted by a high-melting-point resin having a melting point of 150°C or higher. When the composite fiber is, for example, a single-component monofilament cord, the effects of the present invention cannot be attained. In the case of a conventional single-component monofilament cord that is made of a polyolefin resin or the like and has a low melting point, the monofilament cord forms a melt through thermal fusion with the rubber of a rubber article and can thereby be wet-spread and adhered to the adherend rubber; however, once the monofilament cord is melted and the molecular chains of the fiber resin that are oriented in the cord direction become unoriented, the tensile rigidity that is required as a cord material for rubber reinforcement can no longer be maintained. Meanwhile, when the monofilament cord has such a high melting point that does not cause its resin to form a melt even under heating, the melt-fusibility with a rubber is deteriorated. Therefore, in a single-component monofilament cord that is not a composite fiber having the core-sheath structure of the present invention, it is difficult to achieve both conflicting functions of maintaining the tensile rigidity and maintaining the melt-fusibility with a rubber.

In the rubber-fiber composite of the present invention, the high-melting-point resin having a melting point of 150°C or higher that constitutes the core portion is not particularly restricted. Specific examples thereof include polyester resins, such as polypropylene (PP), polyethylene terephthalate (PET), polybutylene terephthalate (PBT), polyethylene naphthalate (PEN) and polytrimethylene terephthalate (PTT); and polyamide resins, such as nylon 6, nylon 66 and nylon 12, and the high-melting-point resin is preferably a polyester resin, a polyolefin resin, or the like. The polyester resin is particularly preferably, for example, a polytrimethylene terephthalate (PTT) resin.

In the present invention, the polytrimethylene terephthalate resin constituting the core portion may be a polytrimethylene terephthalate homopolymer or copolymer, or a mixture of a polytrimethylene terephthalate with other resin that can be mixed. Examples of a copolymerizable monomer of the polytrimethylene terephthalate copolymer include acid components, such as isophthalic acid, succinic acid and adipic acid; glycol components, such as 1,4-butanediol and 1,6-hexanediol; polytetramethylene glycols; and polyoxymethylene glycols. The content of these copolymerizable monomers is not particularly restricted; however, it is preferably 10% by mass or less since these monomers reduce the flexural rigidity of the copolymer. Examples of a polyester resin that can be mixed with a polytrimethylene terephthalate-based polymer include polyethylene terephthalates and polybutylene terephthalate, and the polyester resin may be mixed in an amount of 50% by mass or less.

The intrinsic viscosity $[\eta]$ of the above-described polytrimethylene terephthalate is preferably 0.3 to 1.2, more preferably 0.6 to 1.1. When the intrinsic viscosity is lower than 0.3, the strength and the elongation of the fiber are reduced, whereas when the intrinsic viscosity is higher than 1.2, the productivity is deteriorated due to the occurrence of fiber breakage caused by spinning. The intrinsic viscosity $[\eta]$ can be measured in a 35°C o-chlorophenol solution using an Ostwald viscometer. Further, the melting peak temperature of the polytrimethylene terephthalate, which is determined by DSC in accordance with JIS K7121, is preferably 180°C to 240°C, more preferably 200°C to 235°C. When the melting peak temperature is in a range of 180 to 240°C, high weather resistance is attained, and the bending elastic modulus of the resulting composite fiber can be increased.

As additives in a mixture comprising the above-described polytrimethylene terephthalate resin, for example, a plasticizer, a softening agent, an antistatic agent, a bulking agent, a matting agent, a heat stabilizer, a light stabilizer, a flame retardant, an antibacterial agent, a lubricant, an antioxidant, an ultraviolet absorber, and/or a crystal nucleating agent can be added within a range that does not impair the effects of the present invention.

Further, the polyolefin resin constituting the core portion is, for example, preferably a high-melting-point polyolefin resin, particularly preferably a polypropylene resin, more preferably a crystalline homopolypropylene polymer, still more preferably an isotactic polypropylene.

In the core-sheath type composite fiber used in the present invention, the core portion is constituted by a high-melting-point resin having a melting point of 150°C or higher, and this core portion is not melted even in a rubber vulcanization process. When the present inventor performed 15-minute vulcanization at 195°C, which is higher than the temperature used in ordinary industrial conditions, and observed the cross-section of a cord embedded in a rubber after the vulcanization, it was found that, although the low-melting-point olefin-based polymer of the sheath portion was melted and its initially circular cross-section was deformed, the high-melting-point resin of the core portion maintained the circular cross-sectional shape after core-sheath composite spinning and, without being completely melted, retained a tensile strength at break of not less than 150 N/mm$^2$ as a cord.

In this manner, the present inventor discovered that, as long as the melting point of the resin constituting the core portion of a cord is 150°C or higher, the cord is not melted or broken even when it is subjected to a 195°C heating treatment during vulcanization of a rubber article, and the rubber-reinforcing material of the present invention can thus be obtained. The reason why the cord maintained its material strength and exhibited heat resistance even at a processing temperature higher than the intrinsic melting point of the resin as described above is believed to be because the melting point was increased to be higher than the intrinsic melting point of the resin since the cord was embedded in the rubber and thus vulcanized at a fixed length and this created a condition of fixed-length restriction where fiber shrinkage does not occur, which is different from a method of measuring the melting point without restricting the resin shape as in JIS K7121 and the like. It is known that, as a thermal phenomenon in a situation unique to a fiber material, the melting point is sometimes increased under such a measurement condition of "fixed-length restriction" where fiber shrinkage does not occur (Handbook of Fibers 2nd Edition, published on March 25, 1994; edited by The Society of Fiber Science and Technology, Japan; published by Maruzen Co., Ltd.; page 207, line 13). However, in such a resin material of the present invention, there has not been known any finding that is obtained by examining a cord material presumed to form a melt at a resin melting point or higher in accordance with a JIS method at a temperature corresponding to a rubber vulcanization process and studying a resin material suitable for reinforcement of a rubber article, which resin material is directly adhered to a rubber through thermal fusion and has a satisfactory tensile rigidity of the core portion even under heating in a vulcanization process.

As a preferred example of the present invention, when a polypropylene resin or a PTT resin is used as the resin having a melting point of 150°C or higher that constitutes the core portion, although the resulting cord has a lower modulus than known high-elasticity cords of 66 nylon, polyethylene terephthalate, aramid and the like that are conventionally used as tire cords, since the cord has an intermediate elastic modulus between those of such conventional cords and that of a rubber, the cord can be arranged at a position in a tire where a conventional tire cord could not be arranged, which is one characteristic feature of the present invention.

For example, the production of a rubber article such as a tire includes a vulcanization process in which a member composed of a rubber or a coated cord material is assembled and a molded unvulcanized original form such as a green tire is placed in a mold and subsequently pressed against the mold from inside by high-temperature and high-pressure steam using a rubber balloon-shaped compression equipment called "bladder". In this process, when the modulus of the cord is excessively high, the cord material sometimes does not extend and expand along with the rubber material in the course of transition from the state of being arranged in the molded unvulcanized original form such as a green tire to the state of being pressed against the mold by high-temperature and high-pressure steam and, in such a case, the cord serves as a so-called "cutting thread" (a thread that cuts a lump of clay or the like) to cause a defect such as cutting and separation of the rubber material assembled in the unvulcanized original form. Therefore, without implementing a countermeasure in the production, it is difficult to arrange a high-modulus cord in a tire by a conventional production method. Particularly, in a structure in which a cord is arranged along the tire circumferential direction in a tire side portion, since the cord is jointed in a circular form, a problem in the production that the cord, which is pressed by high-temperature and high-pressure steam and thereby bears a tension, moves in the tire radial direction while cutting the rubber material on the bead side is likely to occur. On the other hand, in the cord of the present invention, since its cord material is also more stretchy than a conventional high-elasticity cord, the production of a rubber article such as a tire can be carried out by a conventional method even when the rubber article has such a product structure or an arrangement in which a cord would serve as a "cutting thread" during the production and processing and thus could not be arranged. Such an increase in the freedom in the design of tire member arrangement is also a characteristic feature of the present invention.

The olefin-based polymer constituting the sheath portion may be any polymer as long as it is composed of an olefin such as ethylene or propylene. The olefin-based polymer is preferably a homopolymer of an addition-polymerizable monomer such as ethylene or propylene, or an olefin-based copolymer such as a random copolymer or a block copolymer.

When the olefin-based polymer is a homopolymer, preferred examples thereof include polypropylenes, high-density polyethylenes, low-density polyethylenes, and linear low-density polyethylenes. These homopolymers are not required to be used individually and may be used as a mixture. Examples of polyethylene-based polymers include, but not particularly limited to: high-density polyethylenes, which are polyethylene polymers having a density of not less than 0.94 g/cm$^3$; and low-density polyethylenes and linear low-density polyethylenes, which are polyethylene polymers having a density of 0.90 g/cm$^3$ to less than 0.94 g/cm$^3$ and, in a preferred example in the present invention, a low-density polyethylene can be used. When the olefin-based polymer is an olefin-based copolymer, it may be a random copolymer or a block copolymer; however, taking the heat shrinkage properties into consideration, the olefin-based polymer is preferably an olefin-based random copolymer.

Other preferred examples of the olefin-based polymer include 1-butene-based copolymers composed of a 1-butene polymer and an $\alpha$-olefin monomer or the like copolymerizable with 1-butene; and ethylene-$\alpha$-olefin copolymers. The content of the copolymerizable $\alpha$-olefin monomer is not particularly restricted; however, fusion with a rubber is easily achieved when the $\alpha$-olefin monomer is copolymerized in a range of less than 80% by mole, and the fusibility with a rubber is further improved when the $\alpha$-olefin monomer is copolymerized in a range of 50% by mole or less, both of which cases are preferred.

Examples of a comonomer that copolymerizes with ethylene or propylene include $\alpha$-olefin monomers, non-conjugated dienes, and other monomers copolymerizable with polypropylene. Monomers that can be used as a comonomer are not restricted to a single kind, and preferred comonomers also include multi-component copolymers in which two or more kinds of monomers are used as in terpolymers.

Examples of $\alpha$-olefin include those having 2 to 20 carbon atoms, specifically, ethylene, 1-butene, 1-pentene, 1-hexene, 1-octene, 1-heptene, 4-methyl-pentene-1, 4-methyl-hexene-1, and 4,4-dimethylpentene-1. Examples of the non-conjugated dienes include 5-ethylidene-2-norbornene, dicyclopentadiene, and 1,4-hexadiene. Particularly, it is preferred to introduce a non-conjugated diene to ethylene and propylene as a third component since a component that is adhesive at the interface with an adherend rubber and has co-vulcanizability with sulfur is incorporated by the introduction of a component of an ethylene-propylene-diene copolymer (EPDM).

Preferred examples of the above-described olefin-based polymer also include an ethylene-propylene copolymer, particularly an ethylene-propylene random copolymer. The propylene content in the ethylene-propylene copolymer is preferably 20 to 99.7% by mole, more preferably 75 to 99.5% by mole, still more preferably 85 to 98% by mole. A propylene content of less than 20% by mole may lead to insufficient impact strength due to, for example, formation of a polyethylene crystal component. Meanwhile, a propylene content of 75% by mole or higher is generally preferred since good spinnability is attained. Further, when the propylene content is 99.7% by mole or less, addition polymerization of other monomer such as ethylene that copolymerizes with polypropylene leads to an increased randomness of the molecular chains, so that a cord that is easily thermally fused is obtained. Moreover, the ethylene content is preferably 0.3% by mole to 80% by mole. An ethylene content of higher than 80% by mole is not preferred since the sheath portion does not have sufficient fracture resistance in the fusion thereof with an adherend rubber, and a crack is thus generated in the sheath portion, making fracture more likely to occur. Meanwhile, when the ethylene content is less than 0.3% by mole, since disturbance of the crystal orientation caused by addition polymerization of the ethylene monomer with a polymer composed of polypropylene is reduced, the thermal fusibility of the resin of the sheath portion tends to be deteriorated. An ethylene content of 1% by mole or higher is preferred since strong thermal fusion tends to be attained as the crystal orientation derived from the polypropylene polymer is further reduced, and this makes the copolymer more compatible with an amorphous polymer of the adherend rubber.

In the present invention, as a linear low-density polyethylene, a copolymer in which ethylene is copolymerized with an $\alpha$-olefin can be preferably used for the purpose of reducing the degree of crystallization. The $\alpha$-olefin content in this linear low-density polyethylene is preferably 1% by mole to 10% by mole, more preferably 2% by mole to 5% by mole. An $\alpha$-olefin content of less than 1% by mole may lead to insufficient impact strength due to, for example, formation of a polyethylene crystal component. Meanwhile, an $\alpha$-olefin content of higher than 10% by mole generally leads to an excessively low crystallinity, so that fibers are more likely to be fused together during spinning. As the $\alpha$-olefin copolymerized in the linear low-density polyethylene, a copolymer obtained by copolymerization of 1-butene, 1-hexene or the like with a comonomer can be preferably used. In the present invention, a copolymer in which the $\alpha$-olefin of the linear low-density polyethylene is 1-hexene can be used.

Examples of a method of producing an olefin-based copolymer resin include slurry polymerization, vapor-phase polymerization and liquid-phase bulk polymerization in which an olefin-based polymerization catalyst such as a Ziegler catalyst or a metallocene catalyst is used and, as a polymerization system, either a batch polymerization system or a continuous polymerization system may be employed.

The term "low-melting-point olefin-based polymer" used herein refers to a composition of a polyolefin resin such a homopolymer (e.g., a polyethylene or a polypropylene) or an ethylene-propylene random copolymer, which is a resin composition having the melting point range defined in the present invention, and it is generally known that a mixed resin composition thereof may have a phase-separated structure. In order to facilitate compatibilization at the interface of the phases with an addition of a block copolymer or the like composed of a soft segment and a hard segment, a compatibilizer may be used. This compatibilizer preferably comprises a segment which shows adhesiveness at the interface between the high-melting-point polyolefin resin that is a core component and the low-melting-point polyolefin resin that is a sheath component, and interacts with the molecular structure of a styrene-butadiene rubber (SBR), a butadiene rubber (BR), a butyl rubber (IIR), a polyisoprene structure-containing natural rubber (IR) or the like that is contained in the sheath component and adherend rubber, since such a compatibilizer improves the adhesion with an adherend rubber.

Examples of the compatibilizer include styrene-butadiene copolymers, polystyrene-poly(ethylene/propylene) block copolymers, styrene-isoprene block copolymers, and completely or partially hydrogenated polymers obtained by hydrogenating a double bond(s) of these block copolymers of styrene and butadiene. Specific examples of the styrene-butadiene copolymers include styrene-butadiene copolymers (SBS), styrene-ethylene-butadiene copolymers (SEB), styrene-ethylene-butadiene-styrene copolymers (SEBS), styrene-butadiene-butylene-styrene copolymers (SBBS), and partially hydrogenated styrene-isoprene-butadiene-styrene copolymers. Examples of the polystyrene-poly(ethylene/propylene) block copolymers include polystyrene-poly(ethylene/propylene) block copolymers (SEP), polystyrene-poly(ethylene/propylene) block-polystyrene (SEPS), polystyrene-poly(ethylene/butylene) block-polystyrene (SEBS), and polystyrene-poly(ethylene-ethylene/propylene) block-polystyrene (SEEPS). Examples of the styrene-isoprene block copolymers include polystyrene-polyisoprene-polystyrene copolymers (SIS).

In the low-melting-point olefin-based polymer, for the purpose of, for example, improving the adhesion at the interface with an adherend rubber composition, a thermoplastic rubber cross-linked with a polypropylene-based copolymer (TPV), any of "other thermoplastic elastomers (TPZ)" in the classification of thermoplastic elastomers described in JIS K6418, or the like may be incorporated in addition to the above-described block copolymer composed of a soft segment and a hard segment. These components enable to finely disperse a partially or highly cross-linked rubber into a continuous phase of a matrix of a thermoplastic resin composition of the low-melting-point polyolefin-based polymer. Examples of the cross-linked thermoplastic rubber include acrylonitrile-butadiene rubbers, natural rubbers, epoxidized natural rubbers, butyl rubbers, and ethylene-propylene-diene rubbers. Examples of the "other thermoplastic elastomers (TPZ)" include syndiotactic-1,2-polybutadiene resins and *trans*-polyisoprene resins.

In the above-described high-melting-point resin and olefin-based polymer, in order to add other properties such as oxidation resistance, an additive(s) normally added to a resin can also be incorporated within a range that does not markedly impair the effects of the present invention and the working efficiency in spinning and the like. As such additional components, conventionally known various additives that are used as additives for polyolefin resins, such as a nucleating agent, an antioxidant, a neutralizer, a light stabilizer, an ultraviolet absorber, a lubricant, an antistatic agent, a filler, a metal deactivator, a peroxide, an anti-microbial fungicide and a fluorescence whitener, and other additives can be used.

Specific examples of the additives include, as nucleating agents, sodium 2,2-methylene-bis (4,6-di-*t*-butylphenyl)phosphate, talc, sorbitol compounds such as 1,3,2,4-di(*p*-methylbenzylidene)sorbitol, and aluminum hydroxy-di(t-butylbenzoate).

Examples of the antioxidant include phenolic antioxidants, such as tris-(3,5-di-*t*-butyl-4-hydroxybenzyl)isocyanurate, 1,1,3-tris(2-methyl-4-hydroxy-5-*t*-butylphenyl)butane, octadecyl-3-(3,5-di-*t*-butyl-4-hydroxyphenyl)propionate, pentaerythritol-tetrakis{3-(3,5-di-*t*-butyl-4-hydroxyphenyl)propionate}, 1,3,5-trimethyl-2,4,6-tris(3,5-di-*t*-butyl-4-hydroxybenzyl)benzene, 3,9-bis[2-{3-(3-*t*-butyl-4-hydroxy-5-methylphenyl)propionyloxy}-1,1-dimethylethyl]-2,4,8,1 0-tetraoxaspiro[5,5]undecane, and 1,3,5-tris(4-*t*-butyl-3-hydroxy-2,6-dimethylbenzyl)isocyanuric acid.

Examples of a phosphorus-based antioxidant include tris(mixed-, mono-, or di-nonylphenyl phosphite), tris(2,4-di-*t*-butylphenyl)phosphite, 4,4'-butylidene-bis(3-methyl-6-*t*-butylphenyl-di-tridecyl)phosphite, 1,1,3-tris(2-methyl-4-di-tridecylphosphite-5-*t*-butylphenyl)butane, bis(2,4-di-*t*-butylphenyl)pentaerythritol diphosphite, tetrakis(2,4-di-*t*-butylphenyl)-4,4'-biphenylene diphosphonite, tetrakis(2,4-di-*t*-butyl-5-methylphenyl)-4,4'-biphenylene diphosphonite, and bis(2,6-di-*t*-butyl-4-methylphenyl)pentaerythritol diphosphite. Examples of a sulfur-based antioxidant include distearyl thiodipropionate, dimyristyl thiodipropionate, and pentaerythritol tetrakis(3-lauryl thiopropionate).

Examples of the neutralizer include calcium stearate, zinc stearate, and hydrotalcite.

Examples of a hindered amine-based stabilizer include polycondensates of dimethyl succinate and 1-(2-hydroxyethyl)-4-hydroxy-2,2,6,6-tetramethylpiperidine, tetrakis(1,2,2,6,6-pentamethyl-4-piperidyl)-1,2,3,4-butane tetracarboxylate, bis(1,2,2,6,6-pentamethyl-4-piperidyl)sebacate, *N,N*-bis(3-aminopropyl)ethylenediamine-2,4-bis{*N*-butyl-*N*-(1,2,2,6,6-pentamethyl-4-piperid yl)amino}-6-chloro-1,3,5-triazine condensate, bis(2,2,6,6-tetramethyl-4-piperidyl)sebacate, poly[{6-(1,1,3,3-tetramethylbutyl)imino-1,3,5-triazine-2,4-diyl} {(2,2,6,6-tetramethyl-4-piperi dyl)imino}hexamethylene{2,2,6,6-tetramethyl-4-piperidyl}imino], and poly[(6-morpholino-*s*-triazine-2,4-diyl)[(2,2,6,6-tetramethyl-4-piperidyl)imino]hexamethylen e{(2,2,6,6-tetramethyl-4-piperidyl)imino}].

Examples of the lubricant include metallic soaps, such as zinc stearate, calcium stearate, and magnesium stearate; paraffin wax; carnauba wax; microcrystalline wax; higher fatty acid amides, such as oleic acid amide, stearic acid amide, behenic acid amide, and ethylene bis-stearylamide; silicone oil; and higher fatty acid esters.

Examples of the antistatic agent include higher fatty acid glycerol esters, alkyl diethanolamines, alkyl diethanolamides, and alkyl diethanolamide fatty acid monoesters.

Examples of the filler include an inorganic particulate carriers, such as carbon black, alumina, silica alumina, magnesium chloride, calcium carbonate and talc, as well as smectite group, vermiculite group and mica group, such as montmorillonite, sauconite, beidellite, nontronite, saponite, hectorite, stevensite, bentonite and taeniolite; and porous organic carriers, such as polypropylenes, polyethylenes, polystyrenes, styrene-divinylbenzene copolymers, and acrylic acid-based copolymers. These filler can be incorporated for reinforcement of the sheath portion when, for example, the sheath portion does not have sufficient fracture resistance and a crack is thus generated in the sheath portion to cause fracture during fusion of the sheath portion with an adherend rubber.

Examples of the ultraviolet absorber include 2-hydroxy-4-*n*-octoxybenzophenone, 2-(2'-hydroxy-3',5'-di-*t*-butylphenyl)-5-chlorobenzotriazole, and 2-(2'-hydroxy-3'-*t*-butyl-5'-methylphenyl)-5-chlorobenzotriazole.

Examples of the light stabilizer include *n*-hexadecyl-3,5-di-*t*-butyl-4-hydroxybenzoate, 2,4-di-*t*-butylphenyl-3',5'-di-*t*-butyl-4'-hydroxybenzoate, bis(2,2,6,6-tetramethyl-4-piperidyl)sebacate, dimethyl succinate-2-(4-hydroxy-2,2,6,6-tetramethyl-1-piperidyl)ethanol condensate, poly{[6-[(1,1,3,3-tetramethylbutyl)amino]-1,3,5-triazine-2,4-diyl][(2,2,6,6-tetramethyl-4-pipe ridyl)imino]hexamethylene[(2,2,6,6-tetramethyl-4-piperidyl)imino]}, and *N,N*-bis(3-aminopropyl)ethylenediamine-2,4-bis[*N*-butyl-*N*-(1,2,2,6,6-pentamethyl-4-piperid yl)amino]-6-chloro-1,3,5-triazine condensate.

Particularly, from the standpoint of the combination of the core portion and the sheath portion, it is preferred to use, as the same olefin resins, a high-melting-point polyolefin resin for the core portion and a low-melting-point polyolefin resin for the sheath portion since good compatibility is thereby attained between the core portion and the sheath portion. By using an olefin resin for both the core portion and the sheath portion, since a high bonding strength is attained at the resulting core-sheath polymer interface and sufficient peeling resistance is provided against interfacial peeling between the core portion and the sheath portion, which are different from those cases where different kinds of resins are used for the core portion and the sheath portion, the resultant can sufficiently exhibit properties as a composite fiber over a long period of time. Specifically, it is preferred to use a crystalline propylene homopolymer having a melting point of 150°C or higher as the high-melting-point polyolefin resin of the core portion and to use a polypropylene-based copolymer resin obtained by copolymerization of a polypropylene and a component(s) copolymerizable with the polypropylene, such as an ethylene-propylene copolymer or an ethylene-butene-propylene ternary copolymer, particularly an ethylene-propylene random copolymer, as the low-melting-point polyolefin resin of the sheath portion. The high-melting-point polyolefin resin of the core portion is particularly preferably an isotactic polypropylene since it provides good fiber-forming properties and the like in spinning.

In this case, the melt flow index (melt flow rate: MFR) (MFR1) of the high-melting point polyolefin resin and the melt flow index (MFR2) of the low-melting-point polyolefin resin are not particularly restricted as long as they are in a range where these resins can be spun; however, the melt flow indices are preferably 0.3 to 100 g/10 min. The same applies to the melt flow index of a high-melting-point resin used in the core portion other than the high-melting point polyolefin resin.

Particularly, the melt flow index (MFR1) of the high-melting-point resin including the high-melting point polyolefin resin can be selected to be in a range of preferably 0.3 to 18 g/10 min, particularly preferably 0.5 to 15 g/10 min, more preferably 1 to 10 g/10 min. The reason for this is because, with the MFR of the high-melting-point resin being in the above-described range, favorable spinning take-up and stretching properties are attained, and a melt of the high-melting-point resin of the core portion does not flow under heating of the vulcanization process in the production of a rubber article, so that the resultant can maintain a cord form.

The melt flow index (MFR2) of the low-melting-point polyolefin resin is preferably 5 g/10 min or higher, particularly preferably 5 to 70 g/10 min, more preferably 10 to 30 g/10 min. In order to improve the thermal fusibility of the low-melting-point polyolefin resin of the sheath portion, a resin having a high MFR is preferably used since such a resin is likely to flow into and fill the gap with an adherend rubber. On the other hand, in cases where other reinforcing member (e.g., a ply cord or a bead core) is provided in the vicinity of where the composite fibers are arranged and when the rubber covering the composite fibers has an unintended void, an excessively high MFR may cause the molten low-melting-point polyolefin resin to wet-spread on the surface of the fiber material of the ply cord or the bead core; therefore, the MFR is particularly preferably not higher than 70 g/10 min. The MFR is more preferably not higher than 30 g/10 min since, in this case, when the composite fibers are in contact with each other, such a phenomenon of fiber-fiber fusion in which the molten low-melting-point polyolefin wet-spreads and forms aggregated fiber conjugates is less likely to occur. Further, an MFR of not higher than 20 g/10 min is still more preferred since it improves the fracture resistance of the resin of the sheath portion at the time of peeling the fused rubber, and the sheath portion is thus strongly adhered with the rubber.

MFR values (g/10 min) are determined in accordance with JIS K7210, and the melt flow rate of a polypropylene-based resin material and that of a polyethylene-based resin material are measured at a temperature of 230°C under a load of 21.18 N (2,160 g) and at a temperature of 190°C under a load of 21.18 N (2,160 g), respectively.

The rubber-resin composite of the present invention is obtained by coating a reinforcing material with a rubber and vulcanizing the resultant, which reinforcing material is composed of a core-sheath type resin body in which a high-melting-point resin having a melting point of 150°C or higher is used for a core portion and an olefin-based polymer having a melting point lower than that of the high-melting point resin is used for a sheath portion. In the rubber-resin composite of the present invention, as described above, at a longitudinal end of the resin body, the end surface of the high-melting-point resin constituting the core portion is covered with the olefin-based polymer constituting the sheath portion, and this low-melting-point polyolefin resin is fused with the rubber.

In the core-sheath type resin body whose core portion is constituted by a high-melting-point resin and sheath portion is constituted by a low-melting-point olefin-based polymer, as described above, the low-melting-point olefin-based polymer of the sheath portion flows during vulcanization and covers the cut end surface of the high-melting-point resin constituting the core portion, whereby the resin of the sheath portion and a rubber can be strongly fused together at the cut end of the resin body.

With regard to the ratio of the core portion and the sheath portion in the composite fiber or the resin body according to the present invention, the ratio of the core portion in the composite fiber or the resin body is preferably 10 to 95% by mass, more preferably 30 to 80% by mass. When the ratio of the core portion is excessively low, the strength of the composite fiber or the resin body is reduced, so that sufficient reinforcing performance may not be attained. The ratio of the core portion is particularly preferably 50% by mass or higher since the reinforcing performance can be enhanced. However, when the ratio of the core portion is excessively high, the core portion is likely to be exposed from the composite fiber or the resin body due to an excessively low ratio of the sheath portion, and sufficient adhesion with a rubber may thus not be attained.

As for the method of producing the composite fiber (monofilament) of the present invention, the composite fiber can be produced by a wet-heating and stretching method using two uniaxial extruders for the core material and the sheath material along with a core-sheath type composite spinneret. The spinning temperature can be set at 170°C to 330°C, preferably 210 to 290°C, for the sheath component; and at 180 to 330°C, preferably 210°C to 300°C, for the core component. Wet-heating can be carried out using, for example, a wet-heating apparatus at 100°C, or a hot water bath at 95 to 100°C, preferably at 95 to 98°C. From the standpoint of thermal fusibility, it is not preferred to cool the resultant once and then perform re-heating and stretching, since crystallization of the sheath portion is thereby facilitated. The stretching ratio is preferably 1.5 or higher from the standpoint of crystallization of the core portion.

In the present invention, the fineness, namely the fiber thickness, of the reinforcing material is preferably in a range of 100 dtex to 5,000 dtex. When the fiber thickness of the reinforcing material is less than 100 dtex, the strength is reduced, and the resulting cord is thus likely to be broken. Particularly, in the case of a tire, in order to inhibit cord breakage during the processing of various steps in the production of the tire, the fiber thickness of the reinforcing material is more preferably not less than 500 dtex. The upper limit of the fiber thickness of the reinforcing material is not particularly defined as long as the reinforcing material can be arranged in each member of a rubber article such as a tire; however, it is preferably 5,000 dtex or less, particularly preferably 4,000 dtex or less. The reason for this is because, in the case of a monofilament cord, not only a large fiber thickness leads to a lower spinning speed at the time of spinning and the economic efficiency in the processing is thus deteriorated, but also it is difficult to bend a thread having a large thickness at the time of winding the thread around a winding tool such as a bobbin, and this deteriorates the working efficiency. In the present invention, the "fiber thickness" means a fiber size (in accordance with JIS L0101) which is determined for a monofilament itself in the case of a monofilament, or for a cord formed by bundling monofilaments together in the case of bundled monofilaments.

Further, one of the characteristic features of the monofilament cord of the present invention is that it is highly adhesive with a rubber even when the reinforcing material has a single fiber thickness of 50 dtex or greater. When the fiber thickness of the reinforcing material is less than 50 dtex, a problem in adhesion with a rubber is unlikely to occur even when the fiber has no adhesion of an adhesive composition or fusion between the fiber resin and a rubber. The reason for this is because, since a small single fiber diameter makes the cord-cutting stress smaller than the adhesion-breaking force, the cord is broken before the cord and a rubber is detached at their interface when the adhesiveness is evaluated by peeling or the like. This phenomenon is also called "fluff adhesion" and can be observed at a single fiber thickness of less than 50 dtex, which is equivalent to the fluff thickness.

Therefore, even when there is no problem for a cord, a nonwoven fabric, a reinforcing material or the like that has a monofilament diameter of less than 50 dtex, a single fiber thickness of 50 dtex or greater, without adhesion provided by an adhesive composition or fusion between the fiber resin and a rubber, presents a problem in adhesion between a rubber and the reinforcing material. The monofilament of the present invention is characterized in that it is highly adhesive with a rubber and its cord end is fusible even when the reinforcing material has a single fiber thickness of 50 dtex or greater.

With regard to the crystallinity parameter measured by Raman spectroscopy, the crystallinity parameter of the ethylene-propylene random copolymer of the sheath portion according to the present invention is preferably -0.06 or less, for example, -0.10 to -0.07 or so. The reason for this is because such a low crystallinity of the resin of the sheath portion makes it easy to perform thermal fusion of crystals by heating.

Further, with regard to the orientation parameter of the ethylene-propylene random copolymer which is determined from the intensity ratio of Raman bands measured by Raman spectroscopy for polarization directions, the orientation parameter of the resin of the sheath portion according to the present invention is preferably 13 or less, for example, 7 to 11 or so. The reason for this is because, when the resin of the sheath portion has a low degree of orientation, thermal fusion thereof with a material having a similar molecular structure is easily achieved.

As a coating rubber used in the rubber-fiber composite of the present invention, a rubber species that is suitable for the rubber article to be reinforced and the site to which the coating rubber is to be applied can be selected as appropriate, and the coating rubber is not particularly restricted. The coating rubber is preferably a diene-containing rubber composition such as a styrene-diene rubber, particularly preferably such a rubber composition further containing a sulfur-based vulcanization agent. Examples of a diene-based rubber include natural rubbers, isoprene rubbers, butadiene rubbers, styrene-butadiene rubbers and chloroprene rubbers, and a rubber composition containing a natural rubber or a butadiene rubber is preferred.

The length of the reinforcing material composed of the composite fiber or the resin body is preferably 10 mm or greater, and the longer the reinforcing material, the more preferred it is. When the length of the reinforcing material composed of the composite fiber or the resin body is less than 10 mm, since integration of the reinforcing material with a rubber requires to employ a method of, for example, kneading the reinforcing material into the rubber and extruding the resultant, it is thus difficult to orient the reinforcing material in a single direction and to rubber-coat the reinforcing material. Further, the difference between a short fiber and a long fiber corresponds to the difference in whether the fiber end acts as a free end or as a fixed end. The longer the fiber, the further can the tension-bearing capacity, which is a characteristic feature of long fibers, be improved; therefore, by appropriately arranging the rubber-fiber composite, the desired performance is more likely to be attained in a rubber article such as a tire.

In the present invention, the mode of a fiber assembly formed by the reinforcing material of the core-sheath composite fiber is not particularly restricted; however, it is preferably a monofilament or a cord in which 10 or less monofilaments are bundled, more preferably a monofilament cord. The reason for this is because, if the assembly of the core-sheath fibers of the present invention is in the fiber form of a cord in which more than 10 monofilaments are bundled, a twisted cord, a nonwoven fabric or a textile, since the low-melting-point polyolefin resin constituting the sheath portion is melted when the fiber assembly is vulcanized in a rubber, the filaments are fused with each other and the resulting molten bodies permeate each other, whereby an aggregated foreign material may be formed in a rubber article. When such a foreign material is generated, a crack may develop from the aggregated foreign material in the rubber article due to strain generated by rolling as in the use of a tire, and this may cause a separation. Accordingly, when the core-sheath fibers form a fiber assembly in a rubber article, since the greater the number of bundled filaments, the less likely the rubber permeate between the resulting cords and the more likely an aggregated foreign material is formed, the industrial use of such a rubber article practically has a problem in durability; therefore, in a fiber structure of a twisted cord, a nonwoven fabric or a textile, it is generally preferred that the number of bundled filaments in a cord be 10 or less.

Further, for the same reason as described above, with regard to the fiber arrangement in a rubber article, it is preferred that monofilament cords of the core-sheath composite fiber do not substantially intersect with each other in the composite, that is, a smaller number of contact points between the monofilament cords is more preferred. Moreover, when the cords are arranged in a paralleled manner, since melting of the resin of the sheath portion and thus infiltration of plural cords with each other are inhibited, a rubber article can be reinforced without any morphological change such as formation of a fiber aggregate, which is preferred. When arranging the core-sheath composite fiber of the present invention in a rubber article, it is preferred to prevent the core-sheath composite fiber from coming into contact with the adhesive-treated surface of other cord, and it is more preferred to incorporate a rubber between the adhesive-treated cord and the core-sheath composite fiber. The reason for this is because, even at the melt flow index of the low-melting-point olefin-based polymer of the present invention, when a melt of the molten polymer wet-spreads on the adhesive-treated surface of other cord, the melt is incorporated into a gap between the adhesive-treated cord and a rubber, and this causes a problem that the adhesion of the adhesive-treated cord surface with the rubber is inhibited. Therefore, when the rubber article is a pneumatic tire, it is preferred to adopt an arrangement in which, for example, a rubber is incorporated between the core-sheath composite fiber of the present invention and cords having an adhesive-treated surface, such as carcass plys, belts and beads, and the outer periphery of these cords having an adhesive-treated surface and the core-sheath composite fiber of the present invention are thereby prevented from coming into contact with each other.

In the present invention, the reinforcing material composed of the core-sheath fiber can be coated with a rubber in a state of being oriented in a single direction. By using the reinforcing material composed of the core-sheath fiber in a state of being oriented in a single direction, a tension applied to a rubber can be taken up by the reinforcing material; therefore, when the reinforcing material is used for a tire reinforcement application, for example, an effect of improving the cut resistance and an effect of dispersing the stress in the tire can be obtained, which is preferred. In this manner, by taking advantage of anisotropy that is an intrinsic property of fibers to allow the reinforcing material to bear the tension, the strength in the fiber axis direction can be utilized to reduce the amount of the rubber to be used, and this consequently enables to attain an effect of improving the tire fuel efficiency through a reduction in tire weight.

The end count of the reinforcing material in the composite of the present invention is preferably 0.5 to 20 per a width of 5 mm. When the end count is excessively small, a sufficient reinforcing effect may not be obtained, whereas an excessively high end count may lead to an increase in weight, neither of which cases is preferred. The composite of the present invention may be arranged in a single layer or in two or more layers at each part to be reinforced as long as it does not cause a problem in the production of a rubber article to be reinforced, and the number of layers to be arranged is not particularly restricted.

As described above, the rubber-fiber composite of the present invention can be suitably used for reinforcement of various rubber articles such as tires, and is capable of achieving desired reinforcing performance while inhibiting an increase in the thickness of a rubber article. Particularly, when the composite of the present invention is used for reinforcement of a tire, the composite of the present invention is more useful as an insert, a flipper, a chipper, a canvas chafer member or the like, which is used together with a skeletal material for the purpose of improving the tire driving stability or the like through suppression of tire vibration/noise, improvement of cut resistance or improvement of the effect of reducing strain during tire deformation, than as a skeletal material which maintains the tire internal pressure and is thus responsible for the strength of the tire.

The post-vulcanization tensile strength at break of the reinforcing material in the rubber-fiber composite of the present invention, that is, the tensile strength at break of the reinforcing material in the rubber-resin composite of the present invention, is preferably not less than 29 $N/mm^2$, more preferably not less than 40 $N/mm^2$, still more preferably not less than 90 $N/mm^2$, particularly preferably not less than 150 $N/mm^2$, and the higher the tensile strength at break, the more preferred it is. In the composite fiber of the present invention, although the sheath portion fuses with a rubber and is thus thermally deformed at a vulcanization temperature when the rubber is processed, the core portion is hardly thermally deformed and is thus not melted and broken in the fiber axis direction of the composite fiber. Accordingly, since the resin portion is continuously provided along the fiber axis direction, a strength of not less than 29 $N/mm^2$, which is higher than the rubber breaking strength, can be attained. This consequently makes the composite an anisotropic material that has a sufficient rubber breaking strength in the fiber axis direction; therefore, a rubber article in which this composite is arranged can attain a function of, for example, bearing strain in a such a specific direction. When the tensile strength at break of the reinforcing material is less than 29 $N/mm^2$, sufficient reinforcing performance may not be obtained in the rubber article after vulcanization. The rubber-fiber composite of the present invention is capable of exhibiting sufficient reinforcing performance even when it is vulcanized at an ordinary vulcanization temperature of 150°C to 200°C after being arranged in a desired part of a rubber article to be reinforced. Therefore, as a reinforcing material of a rubber article such as a tire, the rubber-fiber composite of the present invention can exhibit sufficient reinforcing performance in the applications for, for example, reinforcement of bead portions and side wall portions, such as an insert, a flipper, a chipper and a chafer as described above, as well as reinforcement of a tread portion such as a crown reinforcing layer.

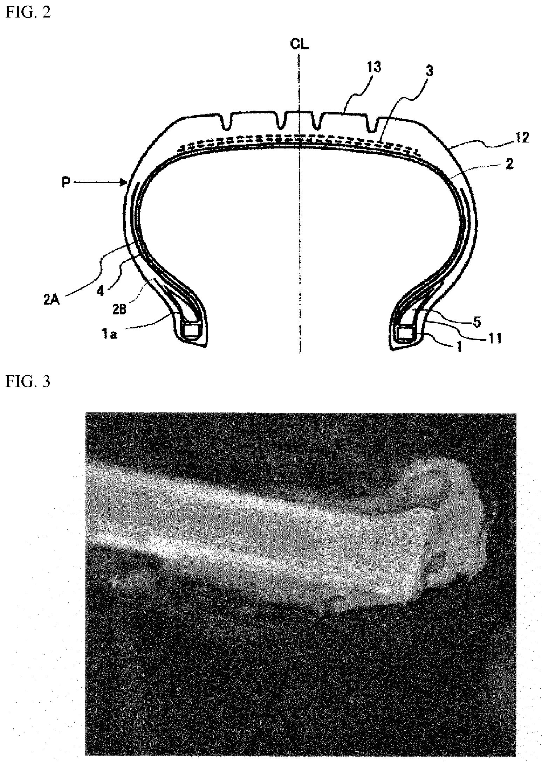

FIG. 2 is a schematic cross-sectional view illustrating one example of the pneumatic tire of the present invention. The illustrated tire comprises: a pair of bead portions 11; a pair of side wall portions 12, which continuously extend on the tire radial-direction outer side from the respective bead portions 11; and a tread portion 13 which extends between the pair of the side wall portions 12 and forms a ground-contacting portion. The illustrated tire has, as its skeleton, a carcass layer 2 which is composed of at least one carcass ply that toroidally extends between bead cores 1 each embedded in the pair of the bead portions 11, and further comprises a belt layer 3 which is arranged on the tire radial-direction outer side of the carcass layer 2 in the crown portion and composed of at least two belts. In addition, although not illustrated in the drawing, an inner liner is arranged on the tire radial-direction inner side of the carcass layer 2. The symbol 5 in FIG. 2 represents a bead filler.

The pneumatic tire of the present invention comprises a reinforcing layer composed of the above-described rubber-fiber composite of the present invention, or a reinforcing layer composed of the above-described rubber-resin composite of the present invention, and this allows the pneumatic tire of the present invention to have superior durability than conventional tires. In the tire of the present invention, the arrangement position of the reinforcing layer is not particularly restricted and, for example, as illustrated in FIG. 2, a reinforcing layer 4 composed of the composite of the present invention can be arranged in at least a part of the bead portions 11 and the side wall portions 12. By arranging the reinforcing layer 4 in the bead portions 11 and the side wall portions 12, the generation of vibration in the tire side portion is suppressed, so that the generation of noise during traveling can be suppressed. In a tire during traveling, the larger the amplitude of the tire wall vibration, the larger is the air vibration, i.e., traveling noise generated on the tire side surface; however, by arranging the reinforcing layer 4, since vibration of the tire side surface can be suppressed due to the tensile force of the composite fiber or the resin body, the sound generated from the tire side surface is reduced, whereby the noise such as pass-by noise can be reduced. In addition, since the reinforcing layer 4 composed of the composite of the present invention is thinner than conventional reinforcing layers constituted by a rubberized cord layer, there is no disadvantage associated with an increase in the thickness of the side portion. Further, since the tire side portion has a temperature of up to about 60°C during normal tire traveling, the composite of the present invention can be applied to a rubber article such as a tire as long as the melting point of the low-melting-point polyolefin-based polymer in the sheath portion is 80°C or higher. During high-strain traveling (e.g., traveling with a flat tire) when the tire bears a temperature of about 110°C, as long as the melting point of the low-melting-point polyolefin-based polymer in the sheath portion of the present invention is 120°C or higher, since this melting point is equivalent to the softening point of an adhesive composition that is composed of resorcin, formalin and latex and conventionally used for adhesion treatment of tire cord surface, it is believed to be possible to ensure thermal durability in the general market where tire cords are conventionally used; therefore, the composite of the present invention can be used as a cord member for reinforcement of an ordinary tire even under severe temperature conditions during traveling that are demanded on the market, which is particularly preferred. The melting point is more preferably 135°C or higher since it makes it possible to apply the composite of the present invention to racing tires and the like in which more stringent durability is required under high-strain and high-temperature conditions than in those tires on the general market.

In the present invention, the reinforcing layer 4 may be arranged in at least a part of the bead portions 11 and the side wall portions 12, and this enables to obtain the expected effects of the present invention by modifying the displacement and the strain distribution during tire rolling with a tension born by the composite fiber or the resin body in the reinforcing layer 4. Preferably, the reinforcing layer 4 is arranged between the bead filler 5 and a main body 2A of the carcass ply extending between the pair of the bead portions 11 and in a region from a tire radial-direction outer end 1a of the bead core 1 to a position P located on the tire shoulder side than the tire maximum width position. Such arrangement of the reinforcing layer 4 in this region is most effective for reduction of noise during traveling and improvement of the tire driving stability.

The position P can be located at an arbitrary position and, for example, when the distance from the lower end of the bead core 1 to the upper end of the belt layer 3 in the tread portion is defined as the tire cross-sectional height in a state where the tire is mounted on an application rim, inflated to a prescribed internal pressure and subjected to a prescribed load, the position P can be located at a position of about 10 to 95% of the tire cross-sectional height. It is noted here that, in examples of the tire of the present invention, the position P was arranged at 75 to 85% of the tire cross-sectional height. The term "application rim" used herein refers to a rim defined by an industrial standard that is valid in each region where the tire is manufactured and used, such as JATMA (Japan Automobile Tyre Manufacturers Association) Year Book in Japan, ETRTO (European Tyre and Rim Technical Organisation) Standard Manual in Europe, or TRA (The Tire and Rim Association Inc.) Year Book in the U.S.; the term "prescribed internal pressure" refers to an inner pressure (maximum air pressure) that corresponds to the tire maximum load capacity defined by a standard of JATMA or the like for a tire of an application size fitted to an application rim; and the term "prescribed load" refers to the maximum mass that is allowable on the tire under the above-described standard.

In the present invention, since the cut surface of the cord end is fused with a rubber at the respective ends of the reinforcing layer 4, there is no restriction associated with crack development from a non-adhered part between the cord end and the rubber due to strain, so that the reinforcing layer 4 can be arranged in a tire portion that is subjected to high strain, which was difficult in the past. Examples of the arrangement of members in such a tire include a case where one end of the reinforcing layer 4 can be arranged at the position P on the tire shoulder side than a tire width-direction end 2B of the carcass ply. Under high-internal pressure and high-load tire traveling conditions, when a conventional cord material having non-adhered ends are laminated on an insert member or the like of the reinforcing layer 4 at such a position, the reinforcing layer 4 and the carcass ply form intersecting layers having different cord lengthwise directions between the layers. In cases where the reinforcing layer 4 is arranged in such a manner to form intersecting layers with the carcass ply in this manner, since cracks are developed from the end surface of the non-adhered part of the reinforcing layer 4 when strain stress such as shear deformation is repeatedly input between the carcass ply and the intersecting reinforcing layer 4 in association with traveling, the durability cannot be increased in the region from the tire side to the respective bead portions. Therefore, in the market, except for those tires having such a special structure that is reinforced with a rubber or other member for inhibition of crack development from the end surface of non-adhered part, hardly any tire having the ends of the reinforcing layer 4 in the same region has been put into practical use. Concerns associated with a crack on the end surface of non-adhered part at the cord end are not limited to such a tire structure; therefore, in pneumatic tires that are increasingly reduced in weight toward the future, it is particularly desired that such ends are tightly adhered.

In the present invention, the reinforcing layer 4 may be arranged such that the fiber axis direction of the reinforcing material is aligned with any direction; however, particularly, the reinforcing layer 4 is preferably arranged such that the orientation direction of the reinforcing material is substantially the same as the tire circumferential direction, or such that the orientation direction of the reinforcing material is substantially at an angle of 30° to 90° with respect to the tire radial direction. As for the noise reduction effect and the driving stability-improving effect, high effects can be obtained since vibration of the tire side portion in the tire transverse direction can be suppressed by the tensile force of the reinforcing material regardless of whether the orientation direction of the reinforcing material is aligned with the tire circumferential direction or at an angle of 30° to 90° with respect to the tire radial direction; however, comparing these cases, higher effects are obtained when the orientation direction of the reinforcing material is aligned with the tire circumferential direction. The reason for this is believed to be because, since the carcass ply cords of a tire are arranged along the tire radial direction, for inhibition of displacement caused by an increase in the gaps between the carcass ply cords, it is more effective to align the orientation direction of the reinforcing material with the tire circumferential direction. Therefore, as long as there is no problem in workability and the like in the production, the angle at which the reinforcing material is arranged is preferably 30° or larger with respect to the tire radial direction since a high effect of inhibiting displacement caused by an increase in the gaps between the carcass ply cords is attained, and the angle at which a member is arranged is particularly preferably 45° or larger, more preferably 90°, with respect to the tire radial direction.

Alternatively, the reinforcing layer 4 may be arranged on the surface of the tire side portion. Further, the reinforcing layer 4 may also be arranged as a canvas formed by intertwining the monofilaments of the present invention.

With regard to improvement of the driving stability, in a tire structure composed of an air film that is supported by a tension applied thereto by an internal pressure generated as a result of inflating a rubber layer composed of a carcass ply toroidally extending between bead cores, it is expected that the parallel arrangement of carcass ply cords reinforcing the regions from the bead portions to the tread portion is less disturbed when displacement, in which the gaps between the carcass ply cords are increased in the tire side portion due to a change in irregularity in the film anti-plane direction, buckling or the like, is suppressed and thus small. When such disturbance in the parallel arrangement of the cords is reduced, a situation in which the stress is unlikely to be transmitted due to disturbance in the parallel arrangement of the carcass ply cords is further improved in the process where the steering force or the like generated by vehicle steering transmits stress from the wheel through the carcass ply to the tire tread portion that is in contact with the ground; therefore, transmission of operation-related stress (e.g., steering force) along the film in-plane direction is expected to be improved, and the driving stability (e.g., steering response) is believed to be thereby enhanced. Further, for the effect of suppressing the displacement of an increase in the gaps between the carcass ply cords, it is particularly effective and preferred to arrange the reinforcing layer 4 along the tire circumferential direction.

The tire of the present invention can be produced by arranging, at the time of molding a green tire, the above-described composite of the present invention in those regions of the bead portions 11 and the side wall portions 12 that are desired to be reinforced, and subsequently vulcanizing the resultant for 3 to 50 minutes at a vulcanization temperature of 140°C to 190°C in accordance with a conventional method. Specifically, for example, in cases where the reinforcing layer 4 is arranged such that the fiber axis direction of the reinforcing material is aligned with the tire circumferential direction, the composite can be arranged in such a manner to form a spirally wound structure along the tire radial direction.

EXAMPLES

The present invention will now be described in more detail by way of examples thereof.

As material thermoplastic resins, the resins for core and sheath materials shown in Table 1 below were used after being dried using a vacuum dryer.

(Example 1)

The polypropylene resin PP-1 shown in Table 1 below and the propylene-ethylene random copolymer CoPP-1 shown in Table 1 below were used as a core component and a sheath component, respectively. Using two cp50-mm uniaxial extruders for the core material and the sheath material along with a core-sheath type composite spinneret having an orifice size of 1.5 mm, the materials were melt-spun at a core component spinning temperature of 265°C and a sheath component spinning temperature of 225°C, a core component discharge rate of 19.5 g/min and a sheath component discharge rate of 13.0 g/min, and a spinning speed of 70 m/min such that a sheath-core ratio of 4:6 was attained in terms of mass ratio, and the resultant was subsequently stretched in a 98°C hot water bath at a stretching ratio of 1.5, whereby a core-sheath type composite monofilament having a fineness of 314 dtex was obtained.

[Table 1]

| PP-1 | Propylene homopolymer (manufactured by Japan Polypropylene Corporation, trade name "SA01A", MFR at 230°C: 9 g/10 min, melting peak temperature (melting point): 167°C) |
|---|---|
| PPT-1 | Polytrimethylene terephthalate (manufactured by Shell Chemicals Japan Ltd., trade name "CORTERRA 9240", MFR at 230°C: 2.5 g/10 min, melting peak temperature (melting point): 228°C, IV value: 0.92, melting start temperature: 213°C) |
| CoPP-1 | Propylene-ethylene random copolymer (manufactured by SunAllomer Ltd., trade name "PM940M", MFR at 230°C: 30 g/10 min, melting peak temperature (melting point): 138°C, ethylene:propylene (molar ratio) = 8:92) |

(continued)

| | | |
|---|---|---|
| CoPP-2 | Propylene-ethylene random copolymer (manufactured by Japan Polypropylene Corporation, trade name "WMG03", MFR at 230°C: 30 g/10 min, melting peak temperature (melting point): 135°C, ethylene: propylene (molar ratio) = 1.5:98.5) | |
| CoPP-3 | Propylene-ethylene random copolymer (manufactured by Prime Polymer Co., Ltd., trade name "F329RA", MFR at 230°C: 25 g/10 min, melting peak temperature (melting point): 135°C, ethylene: propylene (molar ratio) = 22:78) | |
| PE-1 | Low-density polyethylene polymer (manufactured by Japan Polypropylene Corporation, trade name "NOVATEC LJ802", density: 0.918 g/cm$^3$, MFR at 190°C: 22 g/10 min, melting peak temperature (melting point): 106°C | |
| PE-2 | Linear low-density polyethylene polymer (manufactured by Japan Polypropylene Corporation, trade name "KERNEL KS560T", density: 0.898 g/cm , MFR at 190°C: 16.5 g/10 min, -hexene content: 3% by mole, metallocene catalyst, melting peak temperature (melting point): 89°C | |

(Comparative Example 1)

The polypropylene resin PP-1 shown in Table 1 above was used as both the core component and the sheath component. Using two cp50-mm uniaxial extruders for the core material and the sheath material along with a core-sheath type composite spinneret having an orifice size of 1.5 mm, the materials were melt-spun at a spinning temperature of 270°C for both the core component and the sheath components, a core component discharge rate of 19.5 g/min and a sheath component discharge rate of 13.0 g/min, and a spinning speed of 70 m/min such that a sheath-core ratio of 4:6 was attained in terms of weight ratio, and the resultant was subsequently stretched in a 98°C hot water bath at a stretching ratio of 1.3, whereby a core-sheath type composite monofilament having a fineness of 3,422 dtex was obtained.

(Examples 2 to 5)

Core-sheath type composite monofilaments each having the fineness shown in Table 2 below were obtained by changing the discharge rates in Example 1 while maintaining the sheath-core ratio to be 4:6 in terms of weight ratio.

(Examples 6 to 9)

Core-sheath type composite monofilaments each having the fineness shown in Table 2 below were obtained by changing the core component polymer or the sheath component polymer used in Example 1 to the respective polymers shown in Table 1 above and Table 2 below and melt-spinning the polymers at the respective spinning temperatures shown in Table 2 below.

The thus obtained core-sheath type composite monofilaments were each coated with a rubber to prepare rubber-fiber composites, and these rubber-fiber composites were each applied as a reinforcing layer to produce test tires of Examples and Comparative Examples at a tire size of 195/50R16. The thus obtained test tires each had a carcass layer composed of a single carcass ply as a skeleton and were equipped with a belt layer formed by two belts arranged on the tire radial-direction outer side of the carcass layer in the crown portion. In addition, between the main body of the carcass ply and the bead fillers of each test tire and in a 60 mm-wide region of the side wall portion from the tire radial-direction outer end of the bead core to the tire maximum width position, each of the core-sheath type composite monofilaments obtained above was arranged at a total end count of 6 per a width of 5 mm such that the orientation direction of the reinforcing material was substantially aligned with the tire circumferential direction. As for the vulcanization conditions in the production, vulcanization was performed at 186°C for 12 minutes. Further, as Comparative Example 2, a test tire was produced in the same manner as in Example 1 and the like, except that no reinforcing material was arranged.

After peeling off the rubber from each composite taken out of the test tires of Comparative Examples and Examples, the rubber attachment status of the reinforcing material surface was ranked in accordance with Table 3 below, and the rubber adhesion rate (rubber attachment) was checked, the results of which are shown in Table 2 below.

Further, the thus obtained test tires were each fitted to a rim having a size of 16 × 6J, inflated to an internal pressure of 210 kPa and mounted on an actual vehicle. This vehicle was driven on a test track, and the driver evaluated the driving stability based on feeling. The results thereof are shown in Table 2 below, wherein the differences from the test tire of Comparative Example 2 are indicated by numerical values with "+" or "-", taking the test tire of Comparative Example 2 in which no reinforcing material was arranged as a reference (±0). A larger value with "+" means superior performance, with the perfect score being +10.

In order to evaluate the durability of the regions between the side wall portion and the respective bead portions (durability of side bead portions), the tires produced above were each fitted to a rim having a size of 16 × 6J, inflated to an internal pressure of 350 kPa, and then subjected to a drum running test under high-load and high-internal pressure conditions at a load of 9.8 kN and a speed of 60 km/hr. The distance traveled until the failure of a bead portion is shown as an index in Table 2 below, taking the value obtained for the tire of Comparative Example 2 as 100. A larger index value means that the tire traveled over a greater distance until the occurrence of failure and had superior durability of the side bead portions.

Based on the results of evaluating the rubber adhesion rate (rubber attachment), the driving stability and the durability of the side bead portions, overall evaluation was made in accordance with the following criteria. The results thereof are also shown in Table 2 below.

◎: The followings were all satisfied: rubber adhesion rate ≥ A (higher than 80%), driving stability ≥ 2, and durability of side bead portions > 200.

○: The followings were all satisfied: rubber adhesion rate ≥ C (higher than 40%), driving stability ≥ 1, and durability of side bead portions > 100.

×: rubber adhesion rate < C (40% or less), driving stability < standard (±0), and durability of side bead portions ≤ 100

[Table 2]

| | | Comp. Example 1 | Example 1 | Example 2 | Example 3 | Example 4 | Example 5 | Example 6 | Example 7 | Example 8 | Example 9 | Comp. Example 2 |
|---|---|---|---|---|---|---|---|---|---|---|---|---|
| Core portion polymer | Material | PP-1 | PP-1 | PP-1 | PP-1 | PP-1 | PP-1 | PPT-1 | PP-1 | PP-1 | PP-1 | |
| | Melting point (°C) | 167 | 167 | 167 | 167 | 167 | 167 | 228 | 167 | 167 | 167 | |
| Sheath portion polymer | Material | PP-1 | CoPP-1 | CoPP-1 | CoPP-1 | CoPP-1 | CoPP-1 | CoPP-1 | CoPP-3 | PE-1 | PE-2 | |
| | Melting point (°C) | 167 | 138 | 138 | 138 | 138 | 138 | 138 | 135 | 106 | 89 | |
| Spinning temperature (°C) | Sheath portion | 245 | 215 | 215 | 215 | 215 | 215 | 215 | 190 | 190 | 160 | no reinforcing material |
| | Core portion | 245 | 245 | 245 | 245 | 245 | 245 | 265 | 245 | 245 | 245 | |
| Fineness*3 (dtex) | | 3,422 | 314 | 1,652 | 774 | 542 | 370 | 1,083 | 1,072 | 1,106 | 1,006 | |
| Density*3 (g/cm³) | | 0.91 | 0.89 | 0.89 | 0.89 | 0.89 | 0.89 | 0.92 | 0.90 | 0.91 | 0.90 | |
| Adhesion of rubber and fiber after vulcanization (rubber attachment) | | E | A | A | A | A | A | A | B | B | B | |
| Single fiber strength (cN/dtex) | Spun cord | - | 2.1 | 2.0 | 2.2 | 2.2 | 2.3 | 4.4 | 2.2 | 2.2 | 2.3 | |
| | Dug-out cord*1 | - | 1.7 | 1.7 | 1.8 | 1.9 | 1.9 | 3.7 | 1.8 | 1.6 | 1.8 | |
| Driving stability (index) | | -*2 | +1 | +2 | +2 | +2 | +1 | +1 | +1 | +1 | +1 | reference (±0) |
| Durability of side bead portions (index) | | 11 | 113 | 165 | 204 | 252 | 194 | 185 | 142 | 120 | 116 | 100 |
| Overall evaluation | | × | ○ | ○ | ◎ | ◎ | ○ | ○ | ○ | ○ | ○ | × |

*1) Represents the single fiber strength of the reinforcing material after removal from the test tire and peeling of the rubber.

*2) In Comparative Example 1, due to low cord adhesion, the tire running test using a manned vehicle was not performed.

*3) The density and the fineness were measured in accordance with JIS L1013 "Testing Methods for Man-made Filament Yarns".

[Table 3]

| Ranks of rubber adhesion rate (rubber attachment) | Area ratio of coating rubber with respect to filament surface area |
|---|---|
| A | higher than 80% but not higher than 100% |
| B | higher than 60% but not higher than 80% |
| c | higher than 40% but not higher than 60% |
| D | higher than 20% but not higher than 40% |
| E | 0% to 20% |

As shown in Table 2 above, it was confirmed that, in the test tires of Examples in which the rubber-fiber composite composed of a prescribed core-sheath composite fiber according to the present invention was used a reinforcing material, an improved driving stability was attained along with improvement in the durability of the side bead portions as compared to the test tires of Comparative Examples in which a reinforcing material not satisfying such conditions was used.

Moreover, as shown in Table 2 above, a rubber attachment rank of B or higher was attained in all of Examples, and the adhesion state was thus confirmed to be more favorable than the rubber attachment rank E that was given to the polypropylene homopolymer monofilament (melting point: 167°C) corresponding to the core component.

The core-sheath type composite monofilament of Example 1 was inserted into a rubber and the resultant was vulcanized at 160°C for a short period of 3 minutes, after which the thus obtained rubber-resin composite was cut along the extending direction (cord direction) of the monofilament, and the resulting cross-section was photographed and observed under a fluorescence microscope. The thus obtained micrograph is shown in FIG. 3. As shown in FIG. 3, at the cut end of the vulcanized core-sheath type resin body, there was a cut end surface of the white high-melting-point resin of the core portion that was embedded in the black rubber, and the rubber-resin composite, in which the low-melting-point resin of the sheath portion was fused with the rubber in a state of having flowed and covering the high-melting-point resin, was formed.

With regard to the conditions for vulcanization of a rubber article, for example, at a vulcanization temperature of 160°C, vulcanization is normally performed for 5 minutes or longer so as to attain a sufficient sulfur cross-linking density by rubber vulcanization. Accordingly, the vulcanization conditions (at 160°C for a short period of 3 minutes) used for taking the above-described micrograph correspond to the early stage of vulcanization and, under such conditions, it is presumed that, before the air trapped in gaps between members is eliminated due to compression and the members are thus tightly adhered together, the low-melting-point resin of the sheath portion is made to flow by heating and consequently flows into gaps between the rubber and the high-melting-point resin of the core portion at the cut end surface to thereby cover the cut surface.

Next, for a core-sheath type composite monofilament in which an ethylene-propylene random copolymer and a propylene homopolymer were used as sheath components, the crystallinity parameter was measured by Raman spectroscopy and the orientation parameter was determined based on Raman bands in accordance with the below-described methods.

(Examples 10 to 14)

Core-sheath type composite monofilaments each having the fineness shown in Table 4 below were obtained by changing the resin material of the core portion and that of the sheath portion as shown in Table 4 below and performing melt-spinning at the respective spinning temperatures shown in Table 4 below, while maintaining the sheath-core ratio to be 4:6 in terms of weight ratio. For the thus obtained core-sheath type composite monofilaments, the results of evaluating the rubber adhesion rate (rubber attachment) in the same manner as described above are shown in Table 4 below.

With regard to the structural differences in the sheath portions of the thus obtained core-sheath fibers, the crystallinity parameter and the orientation parameter were checked by Raman spectroscopy. After embedding a core-sheath fiber used as a sample in an epoxy resin, a cross-section parallel to the fiber direction was cut out using a microtome equipped with a diamond knife. Then, for a "sheath central part" of this cross-section of the fiber sample, the Raman spectrum was measured using a laser Raman spectrometer (JOBIN YVON T-64000, manufactured by Atago Co., Ltd.) and an $Ar^+$ laser (light source wavelength: 514.5 nm, laser power: 100 W, beam diameter: 1 $\mu$m, diffraction grating: single 1,800 gr/mm, slit: 100 $\mu$m, objective lens: ×100, measurement mode: micro-Raman, detector: CCD (JOBIN YVON 1024×256)). The orientation parameter was evaluated with polarization and the crystallinity parameter was evaluated in the absence of polarization (circular polarization) in the below-described manner.

(Method of Measuring Orientation Parameter)

In the spectrum detected by polarized Raman spectroscopy of the cross-section of each sample, the Raman bands derived from an isotactic PP and observed near 810 $cm^{-1}$ (coupling mode of $CH_2$ bending vibration and C-C stretching vibration) and near 840 $cm^{-1}$ ($CH_2$ bending vibration mode) indicate strong anisotropy for polarization of the incoming light. Of these Raman bands, for the Raman band at 810 $cm^{-1}$, the main axis of the vibration-mode Raman tensor is nearly parallel to the main chain direction of the molecule, while the main axis of the vibration-mode Raman tensor is perpendicular to the main chain direction of the molecule for the Raman band at 840 $cm^{-1}$. Therefore, information relating to the molecular chain orientation was obtained from the intensity ratio of these Raman bands with respect to the polarization directions.

Specifically, as shown below, using the intensity ratio of the Raman bands at 810 $cm^{-1}$ and 840 $cm^{-1}$, the below-described orientation parameter that correlates with the orientation degree of the PP molecular chain was calculated. The thus obtained values are shown in Table 4 below. It is noted here that the higher the degree of orientation toward the polarization direction, the higher is the ratio of the intensity of the band at 810 $cm^{-1}$ with respect to the intensity of the Raman band at 840 $cm^{-1}$. Accordingly, a larger value of this parameter indicates a higher degree of orientation toward the fiber axis direction (parallel), and the value of this parameter is 1 in the absence of orientation.

$$\text{Orientation parameter} = (I_{810}/I_{840})\text{parallel}/(I_{810}/I_{840})\text{perpendicular}$$

$I_{810}$: Raman band intensity near 810 $cm^{-1}$
$I_{840}$: Raman band intensity near 840 $cm^{-1}$
Parallel: the polarization direction of the incoming light is parallel to the fiber axis
Perpendicular: the polarization direction of the incoming light is perpendicular to the fiber axis

(Method of Measuring Crystallinity Parameter)

In the spectrum detected by polarized Raman spectroscopy of the cross-section of each sample, the Raman bands of PP at 800 to 850 $cm^{-1}$ showed strong dependence to the crystal structure as well, and a broad Raman band having a peak near 835 $cm^{-1}$ was observed for amorphous PP. This Raman band near 835 $cm^{-1}$ is separated into two peaks in association with an increase in crystallinity, and highly crystalline PP has peak shifts that are observed near 810 $cm^{-1}$ and 840 $cm^{-1}$; therefore, the crystallinity of PP was analyzed by the following analysis method.

In this analysis, fitting by three-component Lorentz function approximation was performed, and the peak intensity was obtained for each band to calculate the below-described crystallinity parameter. The thus obtained values are shown in Table 4 below.

$$\text{Crystallinity parameter} = (I_{835}/(I_{810} + I_{835} + I_{840}))$$

$I_{810}$: Raman band intensity near 810 $cm^{-1}$

$I_{835}$: Raman band intensity near 835 $cm^{-1}$

$I_{840}$: Raman band intensity near 840 $cm^{-1}$

[Table 4]

| | | Example 10 | Example 11 | Example 12 | Example 13 | Example 14 | Comparative Example 1 |
|---|---|---|---|---|---|---|---|
| Sheath/core composite ratio | | 40/60 | 40/60 | 40/60 | 40/60 | 40/60 | 40/60 |
| Core po rtion polymer | Core portion resin material | PP-1 | PP-1 | PP-1 | PP-1 | PPT-1 | PP-1 |
| | MFR | 9 | 9 | 9 | 9 | 2.5 | 9 |
| Sheath portion material mixture | Sheath portion resin material 1 | CoPP-1 | PP-1 | CoPP-2 | CoPP-1 | CoPP-2 | PP-1 |
| | parts by mass | 100.0 | 80.0 | 100.0 | 100.0 | 100.0 | 100.0 |
| | MFR | 30 | 9 | 30 | 30 | 30 | 9 |
| | Sheath portion resin material 2 | - | CoPP-1 | - | - | - | - |
| | parts by mass | - | 20.0 | - | - | - | - |
| | MFR | - | 30 | - | - | - | - |
| Spinnin g temperat ure (°C) | Core portion | 245 | 245 | 245 | 245 | 245 | 245 |
| | Sheath portion | 215 | 215 | 245 | 245 | 215 | 215 |
| Fineness (dtex) | | 1,142 | 1,097 | 1,105 | 1,063 | 1,130 | 1,086 |
| Crystallinity parameter | | -0.085 | -0.06 | -0.077 | -0.067 | -0.08 | -0.051 |
| Orientation parameter | | 9.0 | 12.0 | 9.6 | 9.2 | 9.5 | 14.5 |
| Adhesion of rubber and fiber after vulcanization (rubber attachment) | | A | B | A | A | A | E |

DESCRIPTION OF SYMBOLS

1: bead core
1a: tire radial-direction outer end of bead core
2: carcass layer
2A: main body of carcass ply
2B: tire width-direction end of carcass ply
3: belt layer
4: reinforcing layer
5: bead filler
11: bead portion
12: side wall portion
13: tread portion
20: rubber-fiber composite
21: core portion
22: sheath portion
30: rubber-resin composite

**Claims**

1.  A rubber-fiber composite obtained by coating a reinforcing material with a rubber, said reinforcing material being composed of a core-sheath type composite fiber whose core portion is constituted by a high-melting-point resin having a melting point of 150°C or higher and sheath portion is constituted by an olefin-based polymer having a melting point lower than that of said high-melting point resin.

2.  The rubber-fiber composite according to claim 1, wherein said olefin-based polymer is an olefin-based random copolymer obtained by addition polymerization of a monomer comprising ethylene or propylene.

3.  The rubber-fiber composite according to claim 1, wherein said olefin-based polymer is an ethylene-propylene random copolymer.

4.  The rubber-fiber composite according to claim 3, wherein the propylene content and the ethylene content in said ethylene-propylene random copolymer are 99.7% by mole to 20% by mole and 0.3% by mole to 80% by mole, respectively.

5.  The rubber-fiber composite according to claim 1, wherein said olefin-based polymer is a polyethylene-based polymer.

6.  The rubber-fiber composite according to claim 5, wherein said polyethylene-based polymer is a polyethylene polymer or an ethylene-$\alpha$-olefin copolymer.

7.  The rubber-fiber composite according to claim 1, wherein said reinforcing material has a fineness of 100 dtex to 5,000 dtex.

8.  The rubber-fiber composite according to claim 1, wherein said reinforcing material does not substantially intersect in said composite and is composed of 1 or not more than 10 bundles.

9.  The rubber-fiber composite according to claim 3, wherein the crystallinity parameter of said ethylene-propylene random copolymer, measured by Raman spectroscopy, is -0.06 or less.

10. The rubber-fiber composite according to claim 3, wherein the orientation parameter of said ethylene-propylene random copolymer, determined from the intensity ratio of Raman bands measured by Raman spectroscopy for polarization directions, is 13 or less.

11. A rubber-resin composite obtained by coating a reinforcing material with a rubber and vulcanizing the resultant, said reinforcing material being composed of a core-sheath type resin body whose core portion is constituted by a high-melting-point resin having a melting point of 150°C or higher and sheath portion is constituted by an olefin-based polymer having a melting point lower than that of said high-melting point resin,
    wherein, at a longitudinal end of said resin body, the end surface of said high-melting-point resin is covered with said olefin-based polymer, and said olefin-based polymer and said rubber are fused together.

12. The rubber-resin composite according to claim 11, wherein said high-melting-point resin is a polyolefin resin or a polyester resin.

13. The rubber-resin composite according to claim 11, wherein said reinforcing material has a fineness of 100 dtex to 5,000 dtex.

14. The rubber-resin composite according to claim 11, wherein said reinforcing material has a tensile strength at break of not less than 29 N/mm$^2$.

15. The rubber-resin composite according to claim 11, wherein said reinforcing material does not substantially intersect in said composite and is composed of 1 or not more than 10 bundles.

16. The rubber-resin composite according to claim 12, wherein said polyester resin is a polytrimethylene terephthalate.

17. A pneumatic tire comprising a reinforcing layer composed of the rubber-fiber composite according to claim 1 or the rubber-resin composite according to claim 11.

FIG. 1A

FIG. 1B

FIG. 1C

FIG. 1D

FIG. 2

FIG. 3

## INTERNATIONAL SEARCH REPORT

| International application No. |
|---|
| PCT/JP2016/073911 |

**A. CLASSIFICATION OF SUBJECT MATTER**
*C08J5/04(2006.01)i, B60C9/00(2006.01)i, D02G3/48(2006.01)i*

According to International Patent Classification (IPC) or to both national classification and IPC

**B. FIELDS SEARCHED**

Minimum documentation searched (classification system followed by classification symbols)
B29B11/16, B29B15/08-15/14, C08J5/04-5/10, C08J5/24, B60C1/00-19/12, D02G1/00-3/48, D02J1/00-13/00, D01F8/00-8/18

Documentation searched other than minimum documentation to the extent that such documents are included in the fields searched
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 10-6406 A (The Yokohama Rubber Co., Ltd.),<br>13 January 1998 (13.01.1998),<br>paragraphs [0008], [0011], [0019]; example 1<br>(Family: none) | 1-15,17<br>16 |
| X<br>Y<br>A | JP 2002-52902 A (Bridgestone Corp.),<br>19 February 2002 (19.02.2002),<br>claims 2, 4; paragraphs [0009], [0014];<br>examples 2, 3<br>(Family: none) | 1-7,9-14,17<br>16<br>8,15 |
| Y | JP 2012-57283 A (Bridgestone Corp.),<br>22 March 2012 (22.03.2012),<br>claims<br>(Family: none) | 16 |

| ☒ | Further documents are listed in the continuation of Box C. | ☐ See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 November 2016 (01.11.16) | 15 November 2016 (15.11.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/073911

C (Continuation). DOCUMENTS CONSIDERED TO BE RELEVANT

| Category* | Citation of document, with indication, where appropriate, of the relevant passages | Relevant to claim No. |
|---|---|---|
| P,X P,A | WO 2015/156405 A1 (Bridgestone Corp.), 15 October 2015 (15.10.2015), claims; paragraphs [0035] to [0039] (Family: none) | 1-15,17 16 |

Form PCT/ISA/210 (continuation of second sheet) (January 2015)

**EP 3 339 354 A1**

**Patent documents cited in the description**

- JP HI06406 B

**Non-patent literature cited in the description**

- Handbook of Fibers. Maruzen Co., Ltd, 25 March 1994, 207